# FASCICULE DE BREVET EUROPEEN

(11) **EP 3 400 190 B1**
(45) Date de publication et mention de la délivrance du brevet: **09.10.2019**
(21) Numéro de dépôt: 17700047.8
(22) Date de dépôt: 04.01.2017
(51) Int. Cl.: B66C 23/20, E04H 5/04, H01M 2/10

(54) **ABRI STATIONNAIRE DE STOCKAGE D'AU MOINS UNE UNITÉ DE STOCKAGE D'ÉNERGIE ÉLECTRIQUE**
STATIONÄRER SCHUTZRAUM ZUR AUFBEWAHRUNG VON MINDESTENS EINER STROMSPEICHEREINHEIT
STATIONARY SHELTER FOR STORING AT LEAST ONE ELECTRICAL ENERGY STORAGE UNIT

(30) Priorité: 05.01.2016 FR 1650049
(43) Date de publication de la demande: 14.11.2018
(73) Titulaire: Blue Solutions, 29500 Ergué Gabéric (FR)
(72) Inventeur: JOURDREN, Arnaud, 29500 Ergue Gaberic (FR); LE DOUSSAL, Jérôme, 29310 Locunole (FR)
(74) Mandataire: Regimbeau
(86) Numéro de dépôt international: PCT/EP2017/050109
(87) Numéro de publication internationale: WO 2017/118645

(56) Documents cités:
- WO-A1-2012/095596
- US-A- 6 041 949
- US-A1- 2005 111 939

## Description

### DOMAINE TECHNIQUE GENERAL

L'invention se situe dans le domaine des installations électriques autonomes et stationnaires, c'est-à-dire des installations fixes, qui couplent des moyens de production d'énergie, tel que des panneaux solaires ou des éoliennes par exemple, avec des unités de stockage de l'énergie électrique ainsi produite.

L'invention concerne plus particulièrement un abri stationnaire de stockage d'au moins une telle unité de stockage d'énergie, cet abri contenant au moins un élément de réception de ladite unité et étant équipé d'un dispositif de levage et de manutention de cette unité.

### ETAT DE L'ART

Les installations électriques précitées sont destinées à être installées dans des zones reculées, difficiles d'accès, par exemple mais non exclusivement en Afrique.

Des "abris", connus sous la dénomination anglaise de "shelters", permettent de loger non seulement au moins une unité de stockage d'énergie, mais également divers dispositifs assurant la gestion électronique de leur fonctionnement et de leur sécurité.

On connait ainsi des abris stationnaires de stockage d'au moins une unité de stockage d'énergie, qui comprennent au moins un emplacement de réception de ladite unité, de préférence plusieurs, superposés et/ou juxtaposés.

En pratique, l'introduction des unités de stockage d'énergie dans l'abri stationnaire s'effectue comme suit. Lesdites unités sont transportées dans des caisses. Un transporteur décharge lesdites caisses à proximité de l'abri. Les caisses sont ouvertes, puis l'opérateur à l'aide d'un chariot élévateur manuel ou motorisé insère lesdites unités dans l'abri stationnaire.

Toutefois, cette opération nécessite de prévoir autour de l'abri stationnaire une zone de chargement adaptée au chariot élévateur, en termes de nivellement du sol et de nature de celui-ci.

Lorsque l'abri de stockage est installé dans des zones d'accès difficile, il peut se trouver sur tout type de terrain, par exemple accidenté, caillouteux, il peut même être sur le sol à une hauteur différente de celle à laquelle peut accéder le chariot élévateur. Dans ces différents cas, et en prenant également en compte les conditions météorologiques, la demanderesse a constaté que le chargement et le déchargement des unités de stockage d'énergie dans et hors de l'abri de stockage peuvent s'avérer dangereux et très complexes.

En outre, il faut tenir compte du fait que ces unités de stockage d'énergie peuvent être assez lourdes, par exemple de l'ordre de 300 kg à 400 kg, voire même 500 kg.

On connaît déjà d'après le document US2005/111939, un dispositif de chargement et déchargement d'une batterie dans et hors d'un puit de stockage d'un rayonnage ouvert. Toutefois, ce document ne donne aucune indication sur la possibilité d'améliorer le stockage et le déplacement d'unités de stockage d'énergie électrique contenues dans un abri stationnaire, au travers d'une ouverture d'accès ménagée dans une paroi de l'abri.

On connaît également d'apèrs le document US 6041949 une armoire électrique munie d'un ensemble de levage destiné à lever et à fixer des appareils de commutation électrique dans les ouvertures de l'armoire.

### PRESENTATION DE L'INVENTION

L'invention a donc pour but de résoudre les inconvénients précités de l'état de la technique et notamment de permettre un chargement ou un déchargement des unités de stockage d'énergie dans et hors de l'abri, qui soit sécurisé pour l'opérateur, sans risques d'endommagements de cette unité ou de cet abri, et ce, même si le terrain situé autour de l'abri ne permet pas d'y amener un chariot élévateur.

L'invention a également pour but de simplifier ces opérations de manutention et de permettre leur mise en oeuvre avec peu d'outils et un seul opérateur.

A cet effet, l'invention concerne un abri stationnaire de stockage d'au moins une unité de stockage d'énergie électrique.

Conformément à l'invention, cet abri comprend au moins un élément de réception de ladite unité, conformé pour que ladite unité puisse y être insérée ou en être extraite, et ce au travers d'une ouverture d'accès ménagée dans une paroi dudit abri stationnaire, et il comprend un dispositif de levage et de manutention de ladite unité, qui permet le chargement et le déchargement de celle-ci dans et hors de l'élément de réception, ce dispositif de levage et de manutention étant assemblé avec au moins une surface extérieure dudit abri par des moyens d'assemblage.

Grâce à ces caractéristiques de l'invention, il n'est plus nécessaire que le sol situé à proximité de l'abri soit stable et plan pour pouvoir recevoir un chariot élévateur. Les unités de stockage d'énergie peuvent être déchargées plus loin de l'abri. Le dispositif de levage et de manutention permet de déplacer lesdites unités de stockage d'énergie et de les introduire ou de les extraire de l'abri.

Selon d'autres caractéristiques avantageuses et non limitatives de l'invention, prises seules ou en combinaison :
- ledit au moins un élément de réception est fixe à l'intérieur de l'abri et est conformé pour que ladite unité de stockage d'énergie électrique puisse y être insérée ou en être extraite par son extrémité débouchant en regard de ladite ouverture d'accès ;
- ledit élément de réception comprend deux équerres parallèles disposées l'une en face de l'autre et à la même hauteur ;
- lesdites équerres sont revêtues au moins en partie par une couche de matériau facilitant l'introduction et le coulissement de ladite unité dans ledit élément de réception ;
- ledit au moins un élément de réception est coulissant, de sorte qu'il peut coulisser au travers de ladite ouverture d'accès entre une position escamotée à l'intérieur dudit abri et une position sortie à l'extérieur de celui-ci, et cet élément de réception coulissant est conformé pour que ladite unité de stockage d'énergie électrique puisse y être insérée ou en être extraite par le haut, lorsqu'il est en position sortie ;
- ledit dispositif de levage et de manutention comprend une potence, un palan, ou un treuil, et un outil d'accrochage de ladite unité ;
- ledit outil d'accrochage de l'unité est un cadre muni en son centre d'un point de fixation au palan, ou treuil, et à ses quatre coins de moyens d'accrochage de ladite unité ;
- ledit outil d'accrochage de l'unité de stockage d'énergie électrique est une fourche munie à son extrémité supérieure d'un point de fixation au palan ou treuil ;
- ladite potence comprend un montant vertical auquel est fixée une traverse horizontale, ce montant et cette traverse étant éventuellement reliés par une barre de soutien oblique, l'extrémité libre de la traverse horizontale portant des moyens d'accrochage dudit palan ou treuil et l'extrémité inférieure dudit montant étant assemblée avec un point de ladite surface extérieure de l'abri par lesdits moyens d'assemblage ;
- la potence est montée pivotante dans un fût ménagé dans la paroi extérieure de l'abri ou fixé sur celle-ci ;
- ladite potence comprend un support horizontal dont les deux extrémités sont recourbées et assemblées avec la paroi supérieure de l'abri par lesdits moyens d'assemblage et une barre longitudinale disposée perpendiculairement au support, dont l'extrémité libre supporte un palan ou un treuil et dont l'extrémité fixe est assemblée avec la paroi supérieure de l'abri par lesdits moyens d'assemblage, la barre longitudinale étant fixée entre ses deux extrémités sur le support, perpendiculairement à celui-ci ;
- la potence comprend un support horizontal dont les deux extrémités sont recourbées et assemblées avec la paroi supérieure de l'abri par lesdits moyens d'assemblage et une barre longitudinale en L dont la branche verticale est montée pivotante dans la paroi supérieure de l'abri par lesdits moyens d'assemblage et dont la branche horizontale peut glisser sur ledit support horizontal lors de la rotation de la potence ;
- la traverse horizontale ou la barre longitudinale comprend à son extrémité libre un élément mobile en translation, tel qu'un chariot ou une portion télescopique, le palan ou treuil étant fixé sur cet élément mobile en translation ;
- les moyens d'assemblage sont des moyens d'assemblage démontables ;
- lesdits moyens d'assemblage démontables comprennent un fût et ce fût est configuré pour que la base de la potence puisse y être insérée et en être extraite de manière démontable ;
- les moyens d'assemblage sont des moyens d'assemblage permanents ;
- lesdits moyens d'assemblage sont positionnés en un point de la surface supérieure de l'abri, tel que la paroi supérieure, un longeron supérieur, une traverse supérieure ou le sommet d'un montant ;
- lesdits moyens d'assemblage sont positionnés en un point de la surface latérale de l'abri, tel que la paroi latérale ou un montant vertical ;
- les moyens d'assemblage sont un fût formé dans l'épaisseur de la surface supérieure de l'abri ;
- les moyens d'assemblage sont un fût formé dans une pièce distincte, rapportée sur la paroi de l'abri, telle une pièce de coin ; et
- le fût est fixé au centre d'une croix de reprise d'efforts dont les quatre extrémités sont assemblées à l'aide de moyens d'assemblage démontables ou permanents à la paroi supérieure dudit abri.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, différents modes de réalisation possibles.

Sur ces dessins :
- les figures 1 à 8 sont des vues en perspective représentant différents modes de réalisation de l'abri stationnaire de stockage, conformes à l'invention,
- la figure 9 est une vue en perspective d'un coin muni d'un fût de réception d'une potence dudit abri,
- la figure 10 est une vue en perspective d'un cadre d'accrochage d'une unité de stockage d'énergie,
- la figure 11 est une vue en perspective d'une fourche d'accrochage d'une unité de stockage d'énergie, et
- la figure 12 est une vue schématique de côté d'un dispositif de levage et de manutention conforme à l'invention.

### DESCRIPTION DETAILLEE

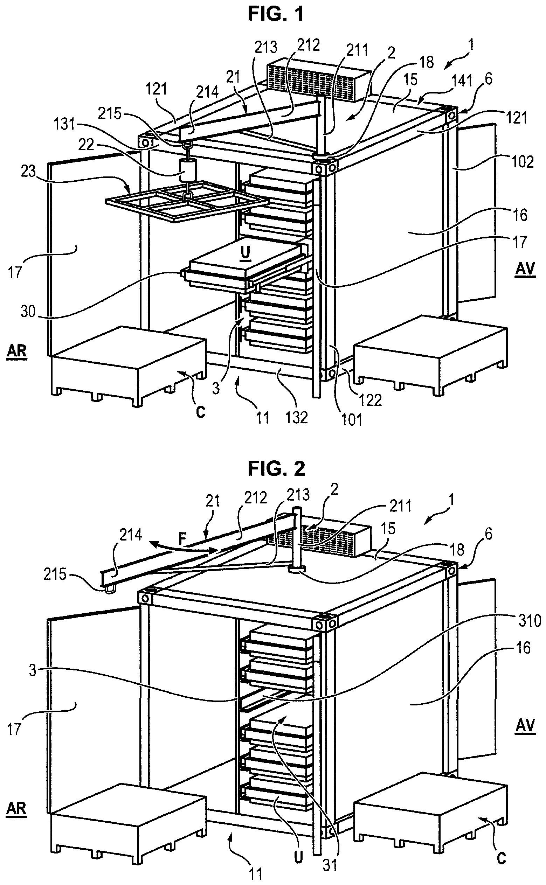

En se reportant à la figure 1, on peut voir un abri stationnaire de stockage 1 d'au moins une unité de stockage d'énergie électrique U, cet abri étant équipé d'un dispositif de levage et de manutention 2 de ladite unité.

Sans que cela soit limitatif, on notera que les unités de stockage d'énergie électrique U dont il est question dans la présente demande sont préférentiellement des batteries de stockage d'énergie électrique, du type LMP® (pour Lithium Métal Polymère) ou du type lithium ions, dont le poids est inférieur à 500 kg, de préférence de l'ordre de 300 kg à 400 kg.

Cet abri 1 est destiné, entre autres, à protéger les unités U des intempéries et à offrir une enceinte climatique stable.

L'abri de stockage 1 est dit "stationnaire", en ce sens qu'il repose sur le sol et n'est pas embarqué sur un véhicule mobile.

L'abri stationnaire 1 est une structure dont la forme générale est de préférence celle d'un parallélépipède cubique ou rectangle.

De préférence, cette structure comprend quatre montants verticaux, dits montants arrière 101, pour les deux situés de part et d'autre d'une ouverture d'accès 11 à l'intérieur de l'abri 1, et dits montants avant 102, pour les deux autres.

Par convention, on dénomme avant AV, le côté de l'abri 1 par lequel un opérateur peut pénétrer, et arrière AR, le côté opposé, qui est également celui par lequel les unités U peuvent être introduites dans ou extraites hors de l'abri 1.

Les montants arrière 101 et avant 102 sont en outre reliés entre eux deux à deux par un longeron supérieur 121 et un longeron inférieur 122.

En outre, les montants arrière 101 sont reliés entre eux par une traverse supérieure arrière 131 et une traverse inférieure arrière 132, tandis que les montants avant 102 sont reliés entre eux par une traverse supérieure avant 141 et une traverse inférieure avant non visible sur les figures.

L'abri 1 présente également une paroi supérieure 15, deux parois latérales 16 dont une seule est visible sur les figures, un fond et une paroi avant non visibles sur les figures. Enfin, de préférence, l'ouverture d'accès 11 est obturée par au moins une porte, ici deux portes battantes référencées 17.

Les différentes parois de l'abri 1 délimitent ensemble une enceinte, à l'intérieur de laquelle est disposée une structure de support 3, destinée à recevoir au moins une unité de stockage d'énergie électrique U.

Cette structure de support 3 est préférentiellement solidaire de l'abri 1 et elle est généralement fixée sur la face intérieure des parois de celui-ci.

Selon un premier mode de réalisation, cette structure de support 3 comprend au moins un élément coulissant 30 de réception d'une unité de stockage d'énergie électrique U et, de préférence, plusieurs de ces éléments coulissants, superposés les uns sur les autres, comme on peut le voir sur les figures, voire juxtaposés, dans des variantes de réalisation non représentées.

Dans son mode de réalisation le plus simple, représenté sur les figures 1 et 3 à 8, cet élément coulissant 30 peut se présenter sous la forme de deux glissières, disposées à la même hauteur, l'une en face de l'autre, chaque glissière portant une équerre de support de ladite unité de stockage d'énergie U. Ces glissières sont conformées pour recevoir ladite unité par le haut.

Dans des modes de réalisation plus élaborés, cet élément coulissant 30 peut se présenter sous la forme d'un berceau ou d'un tiroir, ou de tout autre dispositif de réception d'une unité U.

Quel que soit le mode de réalisation de l'élément coulissant 30, celui-ci peut coulisser au travers de l'ouverture d'accès 11 entre une position escamotée à l'intérieur de l'abri 1, qui est celle représentée par exemple dans les parties supérieures ou inférieures de la figure 1, et une position sortie à l'extérieur de l'abri 1, qui est celle représentée pour l'unité U placée au centre sur la figure 1. En outre, cet élément coulissant 30 est également conformé de façon que l'unité U puisse y être insérée par le haut ou en être extraite par le haut, c'est-à-dire verticalement.

Selon un second mode de réalisation, représenté sur la figure 2, la structure de support 3 comprend au moins un élément de réception 31 fixe, de préférence plusieurs éléments de réception 31 superposés, ou juxtaposés dans des variantes de réalisation non représentées. Chaque élément de réception 31 comprend par exemple deux équerres de support parallèles 310, disposées de façon que leurs ailes horizontales soient situées à la même hauteur, l'une en face de l'autre et espacées l'une de l'autre d'une distance correspondant au moins à la largeur de l'unité de stockage d'énergie électrique U.

Ces deux équerres peuvent également être remplacées, par exemple, par une étagère ou par des rails de guidage fixes dans lesquels viennent coulisser un organe de roulement (tel qu'un patin ou une roue) solidaire d'ailettes latérales de l'unité U.

L'unité U est insérée dans l'élément de réception 31 par coulissement horizontal sur les équerres 310, depuis l'arrière AR de l'abri 1 vers l'AV et en est extraite selon un mouvement inverse.

De façon avantageuse, les équerres 310 peuvent être revêtues au moins en partie d'une couche de matériau facilitant le glissement de l'unité U, tel qu'un matériau polymère à faible surface de frottement, par exemple du polytétrafluoroéthylène (ou PTFE). Cette couche de matériau peut également être disposée sous les ailettes latérales de l'unité U.

Le dispositif de levage et de manutention 2 est assemblé avec la surface extérieure de l'abri stationnaire 1 par des moyens d'assemblage. Par « surface extérieure », on désigne la paroi supérieure 15, une paroi latérale 16, un longeron supérieur 121, une traverse supérieure 131, 141, un montant vertical 101, 102 ou un coin de l'abri 1 parallélépipédique.

Comme on le verra ultérieurement, ces moyens d'assemblage sont de préférence démontables, c'est-à-dire qu'il est possible de séparer le dispositif de levage 2 de l'abri 1 sans les détériorer.

Toutefois, ils pourraient également être non démontables, c'est-à-dire permanents.

De préférence, et comme on peut le voir par exemple sur la figure 1, le dispositif de levage et de manutention 2 comprend une potence 21, un palan 22 (ou un treuil) et un outil d'accrochage 23, 25 de l'unité de stockage d'énergie électrique U.

Le palan ou le treuil 22 peut être manuel ou motorisé.

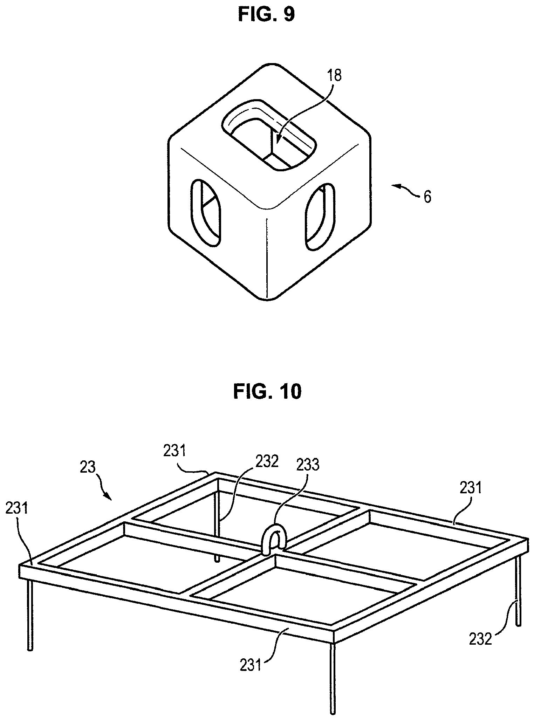

L'outil d'accrochage peut par exemple être un cadre de levage 23, tel que celui représenté sur la figure 10.

Un tel cadre de levage 23 présente préférentiellement à ses quatre coins 231, des chaînes ou crochets ou tiges 232 permettant d'accrocher quatre points d'une unité de stockage d'énergie électrique U et de la déplacer verticalement tout en la maintenant horizontalement. Ce cadre 23 est également muni en son centre d'un point de fixation 233 du palan 22, tel qu'un anneau.

L'outil d'accrochage peut également être une fourche 25 munie de deux branches parallèles horizontales 251 susceptibles d'être glissées sous l'unité U et munie à sa partie supérieure d'un point de fixation 252 (tel qu'un crochet ou anneau) audit palan ou treuil 22.

Le cadre 23 ou la fourche 25 sont en outre conformés pour résister au déplacement de charges lourdes, de préférence inférieures à 500 kg environ, les unités U ayant généralement des poids compris entre 300 kg et 400 kg, comme mentionné précédemment.

On notera que le cadre de levage 23 est utilisé lorsque l'élément de réception est coulissant (élément 30) et que le chargement/déchargement de l'unité U s'effectue par le dessus de cet élément 30. Inversement, la fourche 25 est utilisée lorsque l'élément de réception est fixe (élément 31) et que le chargement/déchargement de l'unité U s'effectue par l'arrière et horizontalement (coulissement sur les équerres 310).

Des premiers modes de réalisation de la potence 21, selon différentes configurations, vont maintenant être décrits en liaison avec les figures 1 à 6 et 12.

Sur la figure 2, la potence 21 comprend un montant vertical 211, sur lequel est fixée une traverse horizontale perpendiculaire 212, ces deux pièces étant éventuellement reliées par une barre de soutien oblique 213.

Le palan ou treuil 22 est accroché à l'extrémité libre 214 de la traverse 212, cette extrémité étant munie par exemple d'un crochet ou anneau de levage 215.

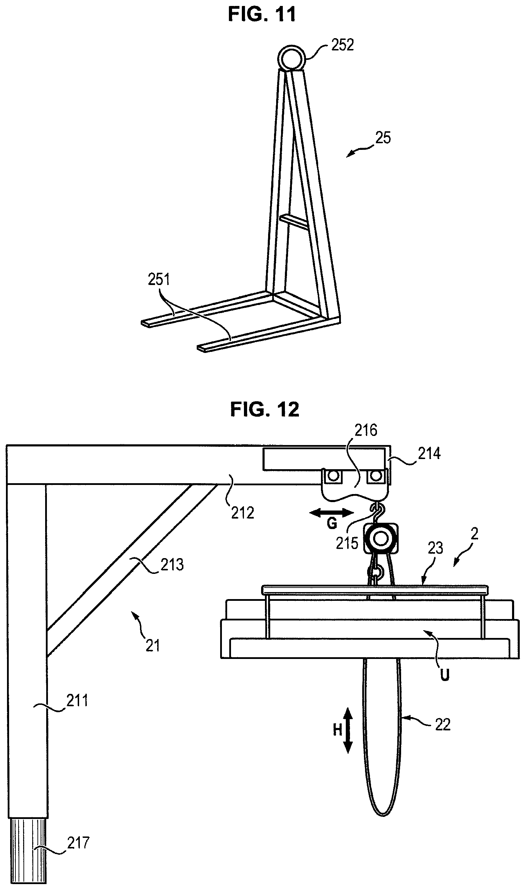

La base 217 de la potence (c'est-à-dire plus précisément l'extrémité inférieure du montant vertical 211 visible sur la figure 12) est assemblée avec un point de la surface extérieure de l'abri 1.

De préférence, cet assemblage est réalisé à l'aide d'un fût 18, c'est-à-dire une structure creuse, d'une forme complémentaire de celle de la base 217 de la potence, par exemple une forme cylindrique ou oblongue.

Le fût 18 constitue ainsi un exemple de réalisation des moyens d'assemblage de la potence 21 avec l'abri 1.

Dans le cas où les moyens d'assemblage sont démontables, la base 217 de la potence 21 est simplement insérée à l'intérieur du fût 18, la longueur de celle-ci et la profondeur du fût 18 étant dimensionnées de façon que la potence 21 ne sorte pas du fût lorsqu'une charge (unité U) est accrochée au palan 22 ou au cadre 23.

De tels moyens d'assemblage démontables permettent à l'utilisateur de déplacer le dispositif de levage et de manutention 2 et de le ranger, par exemple à l'intérieur de l'abri 1 avant et après son utilisation. En outre, ceci permet de déplacer l'abri 1, par exemple pour le transporter jusqu'à son lieu d'installation, sans que le dispositif 2 ne soit en place et ne gêne la manipulation de l'abri 1.

Dans le cas où les moyens d'assemblage sont permanents, la base 217 de la potence 21 est fixée de manière permanente sur l'abri 1, par exemple soudée dans le fût 18.

La potence 21 peut être montée statique ou pivotante autour de son montant vertical 211 (voir par exemple sur la figure 2 la double flèche F qui représente le débattement angulaire de ladite potence). Dans ce dernier cas, la base de la potence 21 peut par exemple pivoter à l'intérieur du fût 18.

La hauteur du montant 211 est adaptée de façon à pouvoir permettre le chargement ou le déchargement de l'unité de stockage d'énergie électrique U qui se trouve à la position la plus haute à l'intérieur de l'abri 1.

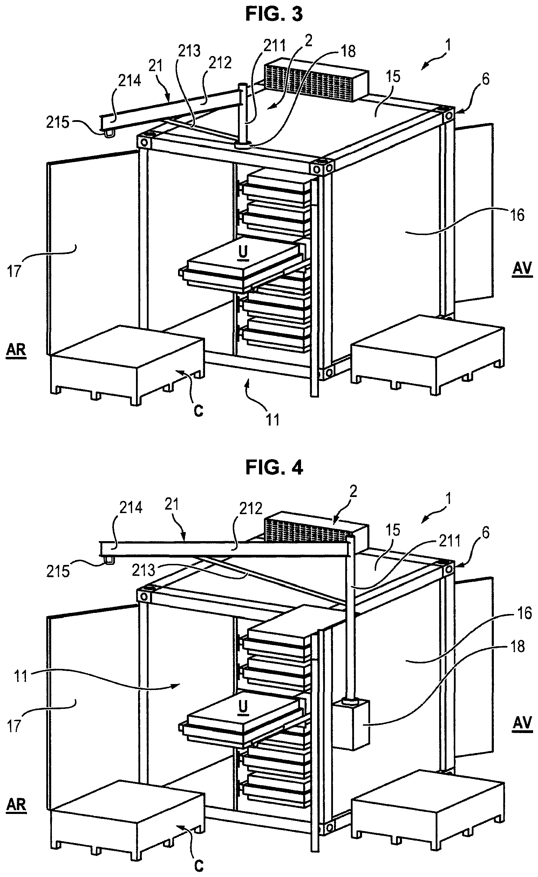

La hauteur du montant 211 est également adaptée au positionnement de la potence. Ainsi, lorsque la potence 21 est montée sur la partie supérieure de l'abri 1, comme cela est représenté sur les figures 1 à 3, sa hauteur sera moindre que lorsque la potence est montée sur une paroi latérale de l'abri 1, comme représenté sur la figure 4.

Par ailleurs, la longueur de la traverse 212 est adaptée au rayon d'action dont on souhaite pouvoir disposer autour de l'abri 1 et également à la position du dispositif de levage 2 sur l'abri 1. Ainsi, par exemple, lorsque la potence 21 est positionnée vers l'avant, comme on peut le voir sur la figure 3, la traverse 212 peut être plus courte que lorsque la potence est disposée au centre de la partie supérieure de l'abri 1, comme on peut le voir sur la figure 2.

Dans tous les cas de figure, le dispositif de levage et de manutention 2 présente une résistance mécanique suffisante au support d'une charge lourde, de préférence inférieure à 500 kg.

Le fût 18 peut être ménagé directement dans les parois de l'abri 1, par exemple dans l'épaisseur de la paroi supérieure 15 de l'abri 1, en tous points de celle-ci, et par exemple en son centre, comme représenté sur la figure 2.

Le fût 18 peut également être ménagé dans l'un des longerons supérieurs 121 ou dans l'une des traverses supérieures arrière 131 ou avant 141 (voir la figure 3).

Enfin, comme on peut le voir sur la figure 1, le fût 18 peut également être ménagé au niveau de l'extrémité supérieure de l'un des montants verticaux, de préférence l'un des montants arrière 101, les extrémités supérieures de ces montants verticaux étant équipées d'un coin 6.

Un tel coin est par exemple un coin dit "ISO", car répondant à une norme ISO. Il est représenté sur la figure 9.

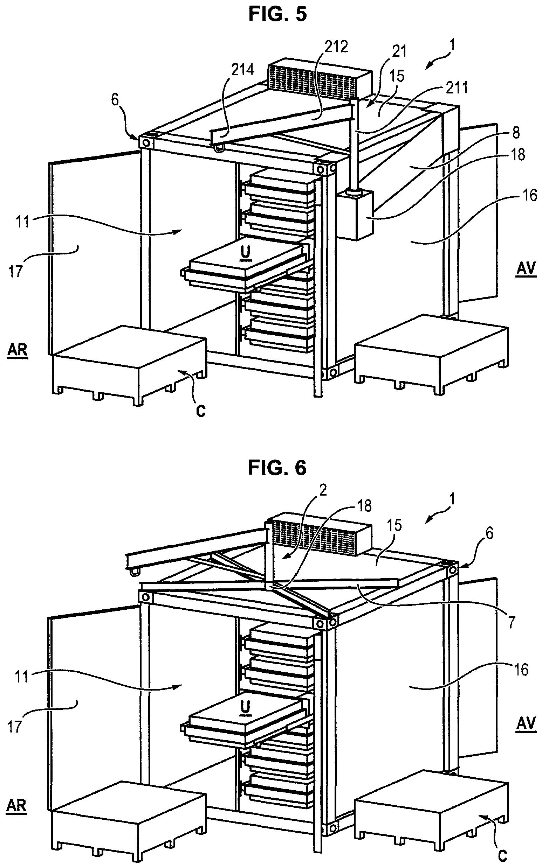

Comme représenté sur la figure 6, le fût 18 peut également être fixé au centre d'une croix de reprise d'efforts 7, cette croix 7 s'étendant sur au moins une partie de la face supérieure 15 de l'abri 1 et ses quatre extrémités étant assemblées de manière démontable ou permanente dans la paroi supérieure 15.

Selon encore une autre variante de réalisation représentée sur la figure 5, le fût 18 est fixé sur un support latéral 8, ce dernier étant fixé par exemple à ses deux extrémités aux angles supérieurs de l'abri 1. Dans cette configuration, la potence 21 repose alors uniquement contre la paroi latérale 16 de l'abri 1 et le support latéral 8 est suspendu.

Comme on peut le voir sur la figure 4, le fût 18 peut également être fixé directement sur la paroi latérale 16 de l'abri 1 en un point quelconque de celle-ci, par exemple vers l'arrière et sensiblement à mi-hauteur. Des moyens de renforcement de la paroi 16 de l'abri 1 peuvent être prévus pour garantir que la fixation de ce fût 18 n'entraînera pas de déformation de ladite paroi 16.

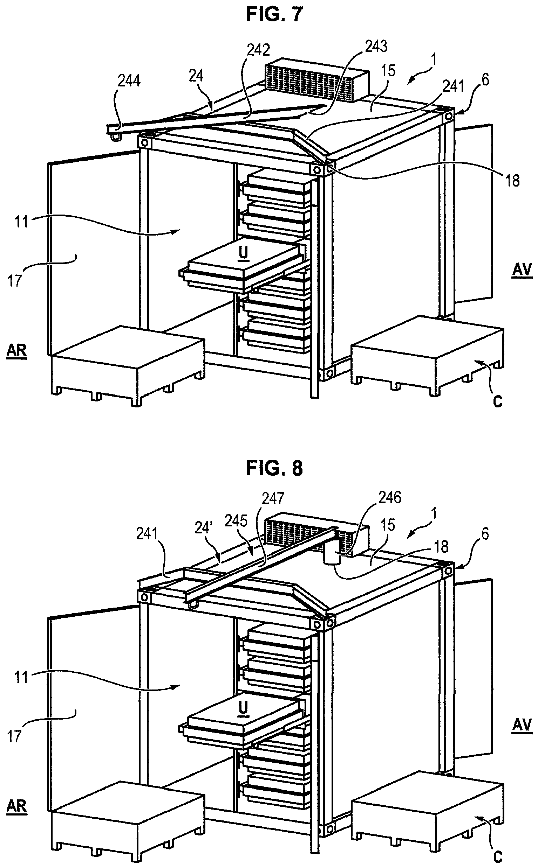

Des seconds modes de réalisation du dispositif de levage et de manutention 2, selon deux autres configurations vont maintenant être décrits en liaison avec les figures 7 et 8. Dans ces configurations, la potence est également équipée d'un palan ou treuil 22 et d'un outil d'accrochage 23 ou 25 bien que ces derniers ne soient pas représentés sur ces figures.

Sur la variante de la figure 7, la potence est alors référencée 24. Elle comprend un support horizontal 241, tel une barre, dont les deux extrémités sont recourbées ou pliées et assemblées avec la paroi supérieure 15 de l'abri 1, par exemple par les moyens d'assemblage démontables ou permanents décrits précédemment (fût de réception desdites extrémités). Cette barre horizontale 241 s'étend à une certaine distance (hauteur) de la paroi supérieure 15 de l'abri 1.

Sur la variante de la figure 7, la potence 24 comprend également une barre longitudinale rectiligne 242, dont l'extrémité fixe (ou inférieure) 243 est assemblée avec la paroi supérieure 15 de l'abri 1 par les moyens d'assemblage démontables ou permanents, tels un fût 18, dont l'extrémité libre (ou supérieure) 244 supporte un crochet ou anneau de fixation du treuil ou palan 22 (non visible sur la figure) et dont la partie médiane est fixée perpendiculairement audit support horizontal 241, de sorte que cette barre 242 est inclinée par rapport à l'horizontale.

La variante de la figure 8 diffère de celle de la figure 7 en ce que la potence qui est alors référencée 24' comprend une barre longitudinale 245 en L, dont la base de la branche verticale 246 est reçue dans un fût 18 et dont la branche horizontale 247 repose dans sa partie médiane sur le support 241. L'extrémité libre de la branche horizontale 247 porte également un anneau ou crochet de soutien du palan ou treuil 22. La barre 245 est montée pivotante autour de la branche verticale 246 de sorte qu'elle peut pivoter dans un plan horizontal, la branche 245 reposant et coulissant sur le support 241.

Selon une variante de réalisation représentée sur la figure 12, l'extrémité libre 214 de la traverse 212 supporte un élément mobile en translation ou chariot coulissant 216. Son déplacement peut être manuel ou motorisé. Le palan ou treuil 22 est fixe sur cet élément 216. Ce chariot 216 apporte un degré de liberté dans le sens horizontal (flèches G) et permet un déplacement horizontal de l'unité U. Ce chariot est particulièrement avantageux lorsqu'il est combiné à la fourche 25, car il permet le chargement de l'unité U par coulissement dans un élément de réception 31 fixe. Ce chariot 216, combiné au palan ou treuil 22 qui permet le mouvement vertical (flèches H), permet d'agrandir le champ d'action du dispositif de levage et de manutention 2.

Ce chariot 216 pourrait être remplacé par une portion télescopique de la traverse 212.

Ce chariot 216 ou cette portion télescopique pourraient également être prévus à l'extrémité des barres longitudinales 242, 247 des potences 24, 24'.

La méthode pour charger une unité de stockage d'énergie électrique U à l'intérieur de l'abri 1 est la suivante.

L'opérateur dépose la caisse C (figures 2 et 3) contenant l'unité U à l'aide d'un outillage approprié dans la zone de déchargement disposée à proximité de l'abri 1. Il ouvre la caisse C et arrime l'outil d'accrochage 23 ou 25 à l'unité U. Il déplace ensuite si nécessaire la potence de façon à amener le palan ou le treuil 22 au-dessus de l'outil 23, 25 et accroche le palan ou treuil à cet outil.

En fonction des différents modes de réalisation de l'invention, l'opérateur déplace ou non la potence, actionne le chariot 216 et le palan 22 et amène l'unité U à proximité de l'élément de réception 30, 31. Si le support de réception est coulissant, il le sort de l'abri 1, verrouille éventuellement le support 30 en position sortie, dépose l'unité de stockage d'énergie électrique U à l'intérieur par le haut, détache ensuite l'outil d'accrochage 23, 25, puis ramène l'élément coulissant 30 et l'unité U en position escamotée à l'intérieur de l'abri 1.

S'il s'agit du support de réception 31 fixe, il fait coulisser l'unité U sur les équerres 310 à l'aide de la fourche 25.

Une seule personne suffit pour effectuer cette manoeuvre. D'un point de vue sécurité, il n'y a plus de risque lié à l'état de la zone de chargement qui s'étend autour de l'abri.

## Revendications

1. Abri stationnaire (1) de stockage d'au moins une unité de stockage d'énergie électrique (U), **caractérisé en ce qu'**il comprend au moins un élément (30, 31) de réception de ladite unité (U), conformé pour que ladite unité (U) puisse y être insérée ou en être extraite, et ce au travers d'une ouverture d'accès (11) ménagée dans une paroi dudit abri stationnaire (1), et **en ce qu'**il comprend un dispositif de levage et de manutention (2) de ladite unité (U), qui permet le chargement et le déchargement de celle-ci dans et hors de l'élément de réception (30, 31), ce dispositif de levage et de manutention (2) étant assemblé avec au moins une surface extérieure dudit abri (1) par des moyens d'assemblage (18).

2. Abri (1) selon la revendication 1, **caractérisé en ce que** ledit au moins un élément (31) de réception est fixe à l'intérieur de l'abri et est conformé pour que ladite unité de stockage d'énergie électrique (U) puisse y être insérée ou en être extraite par son extrémité débouchant en regard de ladite ouverture d'accès (11).

3. Abri (1) selon la revendication précédente, **caractérisé en ce que** ledit élément (31) de réception comprend deux équerres (310) parallèles disposées l'une en face de l'autre et à la même hauteur.

4. Abri (1) selon la revendication précédente, **caractérisé en ce que** lesdites équerres (310) sont revêtues au moins en partie par une couche de matériau facilitant l'introduction et le coulissement de ladite unité (U) dans ledit élément de réception (31).

5. Abri (1) selon la revendication 1, **caractérisé en ce que** ledit au moins un élément (30) de réception est coulissant, de sorte qu'il peut coulisser au travers de ladite ouverture d'accès (11) entre une position escamotée à l'intérieur dudit abri (1) et une position sortie à l'extérieur de celui-ci, et **en ce que** cet élément (30) de réception coulissant est conformé pour que ladite unité de stockage d'énergie électrique (U) puisse y être insérée ou en être extraite par le haut, lorsqu'il est en position sortie.

6. Abri (1) selon l'une des revendications précédentes, **caractérisé en ce que** ledit dispositif de levage et de manutention (2) comprend une potence (21, 24, 24'), un palan (22), ou un treuil, et un outil d'accrochage (23, 25) de l'unité de stockage (U).

7. Abri (1) selon la revendication 6, **caractérisé en ce que** ledit outil d'accrochage de l'unité (U) est un cadre (23) muni en son centre d'un point de fixation (233) au palan (22), ou treuil, et à ses quatre coins (231) de moyens d'accrochage (232) de ladite unité (U).

8. Abri (1) selon la revendication 6, **caractérisé en ce que** ledit outil d'accrochage de l'unité de stockage d'énergie électrique (U) est une fourche (25) munie à son extrémité supérieure d'un point de fixation (252) au palan (22) ou treuil.

9. Abri (1) selon l'une des revendications 6 à 8, **caractérisé en ce que** ladite potence (21) comprend un montant vertical (211) auquel est fixée une traverse horizontale (212), ce montant (211) et cette traverse (212) étant éventuellement reliés par une barre de soutien oblique (213), l'extrémité libre (214) de la traverse horizontale (212) portant des moyens d'accrochage (215) dudit palan ou treuil (22) et l'extrémité inférieure (216) dudit montant (211) étant assemblée avec un point de ladite surface extérieure de l'abri (1) par lesdits moyens d'assemblage (18).

10. Abri (1) selon la revendication 9, **caractérisé en ce que** la potence (21) est montée pivotante dans un fût (18) ménagé dans la paroi extérieure (15, 16) de l'abri (1) ou fixé sur celle-ci.

11. Abri (1) selon l'une des revendications 6 à 8, **caractérisé en ce que** ladite potence (24) comprend un support horizontal (241) dont les deux extrémités sont recourbées et assemblées avec la paroi supérieure (15) de l'abri (1) par lesdits moyens d'assemblage (18) et une barre longitudinale (242) disposée perpendiculairement au support (241), dont l'extrémité libre supporte un palan ou un treuil (22) et dont l'extrémité fixe (243) est assemblée avec la paroi supérieure (15) de l'abri (1) par lesdits moyens d'assemblage (18), la barre longitudinale (242) étant fixée entre ses deux extrémités sur le support (241), perpendiculairement à celui-ci.

12. Abri (1) selon l'une des revendications 6 à 8, **caractérisé en ce que** la potence (24') comprend un support horizontal (241) dont les deux extrémités sont recourbées et assemblées avec la paroi supérieure (15) de l'abri (1) par lesdits moyens d'assemblage (18) et une barre longitudinale (245) en L dont la branche verticale (246) est montée pivotante dans la paroi supérieure (15) de l'abri (1) par lesdits moyens d'assemblage (18) et dont la branche horizontale (247) peut glisser sur ledit support horizontal (241) lors de la rotation de la potence (24').

13. Abri (1) selon l'une des revendications 9 à 12, **caractérisé en ce que** la traverse horizontale (212) ou la barre longitudinale (242, 247) comprend à son extrémité libre (214) un élément mobile en translation, tel qu'un chariot (216) ou une portion télescopique, le palan (22) ou treuil étant fixé sur cet élément mobile en translation.

14. Abri (1) selon l'une des revendications précédentes, **caractérisé en ce que** les moyens d'assemblage (18) sont des moyens d'assemblage démontables.

15. Abri (1) selon les revendications 6 et 14, **caractérisé en ce que** lesdits moyens d'assemblage démontables comprennent un fût (18) et **en ce que** ce fût (18) est configuré pour que la base (216) de la potence (21, 24, 24') puisse y être insérée et en être extraite de manière démontable.

16. Abri (1) selon l'une des revendications 1 à 13, **caractérisé en ce que** les moyens d'assemblage (18) sont des moyens d'assemblage permanents.

17. Abri (1) selon l'une des revendications précédentes, **caractérisé en ce que** lesdits moyens d'assemblage (18) sont positionnés en un point de la surface supérieure de l'abri (1), tel que la paroi supérieure (15), un longeron supérieur (121), une traverse supérieure (131, 141) ou le sommet d'un montant (101, 102).

18. Abri (1) selon l'une des revendications 1 à 16, **caractérisé en ce que** lesdits moyens d'assemblage (18) sont positionnés en un point de la surface latérale de l'abri, tel que la paroi latérale (16) ou un montant vertical (101, 102).

19. Abri (1) selon la revendication 17, **caractérisé en ce que** les moyens d'assemblage (18) sont un fût formé dans l'épaisseur de la surface supérieure de l'abri.

20. Abri (1) selon la revendication 17 ou 18, **caractérisé en ce que** les moyens d'assemblage (18) sont un fût formé dans une pièce distincte, rapportée sur la paroi de l'abri (1), telle une pièce de coin (6).

21. Abri (1) selon la revendication 15, **caractérisé en ce que** le fût (18) est fixé au centre d'une croix de reprise d'efforts (7) dont les quatre extrémités sont assemblées à l'aide de moyens d'assemblage démontables ou permanents (18) à la paroi supérieure (15) dudit abri (1).

## Patentansprüche

1. Stationärer Schutzraum (1) zur Aufbewahrung von mindestens einer Stromspeichereinheit (U), **dadurch gekennzeichnet, dass** er mindestens ein Aufnahmeelement (30, 31) der Einheit (U) umfasst, der ausgebildet ist, damit die Einheit (U) dort eingesetzt oder daraus entfernt werden kann, und zwar durch eine Zugangsöffnung (11), die in einer Wand des stationären Schutzraums (1) eingerichtet ist, und dadurch, dass er eine Hub- und Handhabungsvorrichtung (2) der Einheit (U) umfasst, die das Ein- und Ausladen derselben in das und aus dem Aufnahmeelement (30, 31) erlaubt, wobei diese Hub- und Handhabungsvorrichtung (2) mit mindestens einer äußeren Fläche des Schutzraums (1) durch Verbindungsmittel (18) verbunden ist.

2. Schutzraum (1) nach Anspruch 1, **dadurch gekennzeichnet, dass** das mindestens eine Aufnahmeelement (31) im Inneren des Schutzraums befestigt ist und ausgebildet ist, damit die Stromspeichereinheit (U) durch sein Ende, das gegenüber der Zugangsöffnung (11) ausmündet, dort eingesetzt oder daraus entfernt werden kann.

3. Schutzraum (1) nach vorangehendem Anspruch, **dadurch gekennzeichnet, dass** das Aufnahmeelement (31) zwei parallele Winkel (310) umfasst, die gegenüber und in derselben Höhe angeordnet sind.

4. Schutzraum (1) nach vorangehendem Anspruch, **dadurch gekennzeichnet, dass** die Winkel (310) mindestens teilweise mit einer Materialschicht beschichtet sind, die das Einsetzen und das Gleiten der Einheit (U) in dem Aufnahmeelement (31) erleichtert.

5. Schutzraum (1) nach Anspruch 1, **dadurch gekennzeichnet, dass** das mindestens eine Aufnahmeelement (30) derart gleitend ist, dass es durch die Zugangsöffnung (11) zwischen einer in das Innere des Schutzraums (1) eingerasteten Position und einer nach außen von diesem ausgegebenen Position gleiten kann, und dass dieses gleitende Aufnahmeelement (30) ausgebildet ist, damit die Stromspeichereinheit (U) dort eingesetzt oder daraus nach oben entfernt werden kann, wenn es in ausgegebener Position ist.

6. Schutzraum (1) nach einem der vorangehenden Ansprüche, **dadurch gekennzeichnet, dass** die Hub- und Handhabungsvorrichtung (2) einen Ausleger (21, 24, 24'), ein Hebezeug (22) oder eine Winde und ein Verankerungswerkzeug (23, 25) der Speichereinheit (U) umfasst.

7. Schutzraum (1) nach Anspruch 6, **dadurch gekennzeichnet, dass** das Verankerungswerkzeug der Einheit (U) ein Rahmen (23) ist, der in seinem Zentrum mit einem Befestigungspunkt (233) am Hebezeug (22) oder Winde und an seinen vier Ecken (231) mit Verankerungsmitteln (232) der Einheit (U) versehen ist.

8. Schutzraum (1) nach Anspruch 6, **dadurch gekennzeichnet, dass** das Verankerungswerkzeug der Stromspeichereinheit (U) eine Gabel (25) ist, die an ihrem oberen Ende mit einem Befestigungspunkt (252) am Hebezeug (22) oder Winde versehen ist.

9. Schutzraum (1) nach einem der Ansprüche 6 bis 8, **dadurch gekennzeichnet, dass** der Ausleger (21) einen vertikalen Pfosten (211) umfasst, an dem ein horizontaler Querträger (212) befestigt ist, wobei dieser Pfosten (211) und dieser Querträger (212) eventuell durch einen schrägen Stützbalken (213) verbunden sind, wobei das freie Ende (214) des horizontalen Querträgers (212), das Verankerungsmittel (215) des Hebezeugs oder Winde (22) trägt, und das untere Ende (216) des Pfostens (211) mit einem Punkt der äußeren Fläche des Schutzraums (1) durch die Verbindungsmittel (18) verbunden sind.

10. Schutzraum (1) nach Anspruch 9, **dadurch gekennzeichnet, dass** der Ausleger (21) schwenkend in einem Schaft (18) angebracht ist, der in der Außenwand (15, 16) des Schutzraums (1) eingerichtet ist, oder an dieser befestigt ist.

11. Schutzraum (1) nach einem der Ansprüche 6 bis 8, **dadurch gekennzeichnet, dass** der Ausleger (24) eine horizontale Stütze (241) umfasst, deren beide Enden gekrümmt und mit der oberen Wand (15) des Schutzraums (1) durch die Verbindungsmittel (18) verbunden sind und einen Längsbalken (242), der senkrecht zu der Stütze (241) angeordnet ist, dessen freies Ende ein Hebezeug oder eine Winde (22) trägt und dessen festes Ende (243) mit der oberen Wand (15) des Schutzraums (1) durch die Verbindungsmittel (18) verbunden ist, wobei der Längsbalken (242) zwischen seinen beiden Enden auf der Stütze (241) senkrecht zu dieser befestigt ist.

12. Schutzraum (1) nach einem der Ansprüche 6 bis 8, **dadurch gekennzeichnet, dass** der Ausleger (24') eine horizontale Stütze (241) umfasst, deren beide Enden gekrümmt und mit der oberen Wand (15) des Schutzraums (1) durch die Verbindungsmittel (18) verbunden sind und einen L-förmigen Längsbalken (245), dessen vertikaler Schenkel (246) schwenkend in der oberen Wand (15) des Schutzraums (1) durch die Verbindungsmittel (18) angebracht ist und dessen horizontaler Schenkel (247) bei der Rotation des Auslegers (24') über die horizontale Stütze (241) gleiten kann.

13. Schutzraum (1) nach einem der Ansprüche 9 bis 12, **dadurch gekennzeichnet, dass** der horizontale Querträger (212) oder der Längsbalken (242, 247) an seinem freien Ende (214) ein translatorisch bewegliches Element wie einen Schlitten (216) oder einen teleskopischen Abschnitt umfasst, wobei das Hebezeug (22) oder Winde auf diesem translatorisch beweglichen Element befestigt ist.

14. Schutzraum (1) nach einem der vorangehenden Ansprüche, **dadurch gekennzeichnet, dass** die Verbindungsmittel (18) demontierbare Verbindungsmittel sind.

15. Schutzraum (1) nach den Ansprüchen 6 und 14, **dadurch gekennzeichnet, dass** die demontierbaren Verbindungsmittel einen Schaft (18) umfassen und dass dieser Schaft (18) konfiguriert ist, damit die Basis (216) des Auslegers (21, 24, 24') dort eingesetzt oder daraus demontierbar entfernt werden kann.

16. Schutzraum (1) nach einem der Ansprüche 1 bis 13, **dadurch gekennzeichnet, dass** die Verbindungsmittel (18) ständige Verbindungsmittel sind.

17. Schutzraum (1) nach einem der vorangehenden Ansprüche, **dadurch gekennzeichnet, dass** die Verbindungsmittel (18) an einem Punkt der oberen Fläche des Schutzraums (1) wie die obere Wand (15), ein oberer Längsträger (121), ein oberer Querträger (131, 141) oder die Spitze eines Pfostens (101, 102) positioniert sind.

18. Schutzraum (1) nach einem der Ansprüche 1 bis 16, **dadurch gekennzeichnet, dass** die Verbindungsmittel (18) an einem Punkt der seitlichen Fläche des Schutzraums wie die Seitenwand (16) oder ein vertikaler Pfosten (101, 102) positioniert sind.

19. Schutzraum (1) nach Anspruch 17, **dadurch gekennzeichnet, dass** die Verbindungsmittel (18) ein Schaft sind, der in der Stärke der oberen Fläche des Schutzraums ausgebildet sind.

20. Schutzraum (1) nach Anspruch 17 oder 18, **dadurch gekennzeichnet, dass** die Verbindungsmittel (18) ein Schaft sind, der in einem gesonderten Teil ausgebildet ist, das auf einer Wand des Schutzraums (1) wie ein Eckteil (6) angebracht ist.

21. Schutzraum (1) nach Anspruch 15, **dadurch gekennzeichnet, dass** der Schaft (18) im Zentrum eines Kraftaufnahmekreuzes (7) befestigt ist, dessen vier Enden mit Hilfe von demontierbaren oder ständigen Verbindungsmitteln (18) an der oberen Wand (15) des Schutzraums (1) verbunden sind.

## Claims

1. A stationary shelter (1) for storing at least one electrical energy storage unit (U), **characterized in that** it comprises at least one element (30, 31) for receiving said unit (U), configured so that said unit (U) can be inserted into it or extracted from it, via an access opening (11) made in a wall of said stationary shelter (1), and **in that** it comprises a device for lifting and handling (2) said unit (U), which allows the loading and unloading of the latter in and out of the receiving element (30, 31), this device for lifting and handling (2) being assembled with at least one external surface of said shelter (1) by assembly means (18).

2. The shelter (1) according to Claim 1, **characterized in that** said at least one receiving element (31) is fixed inside the shelter and is configured so that said electrical energy storage unit (U) can be inserted into it or extracted from it via its end leading opposite said access opening (11).

3. The shelter (1) according to the preceding claim, **characterized in that** said receiving element (31) comprises two parallel brackets (310) arranged opposite each other and at the same height.

4. The shelter (1) according to the preceding claim, **characterized in that** said brackets (310) are coated at least in part by a layer of material for easy introduction and sliding of said unit (U) in said receiving element (31).

5. The shelter (1) according to Claim 1, **characterized in that** said at least one receiving element (30) is sliding, such that it can slide via said access opening (11) between a retracted position inside said shelter (1) and an extended position outside the latter, and **in that** this sliding receiving element (30) is configured so that said electrical energy storage unit (U) can be inserted into it or extracted from it from the top, when it is in extended position.

6. The shelter (1) according to any one of the preceding claims, **characterized in that** said device for lifting and handling (2) comprises a gallows (21, 24, 24'), a hoist (22), or a winch, and a hooking mechanism (23, 25) of the storage unit (U).

7. The shelter (1) according to Claim 6, **characterized in that** said hooking mechanism of the unit (U) is a frame (23) fitted in its centre with a fastening point (233) on the hoist (22), or winch, and at its four corners (231) with hooking means (232) of said unit (U).

8. The shelter (1) according to Claim 6, **characterized in that** said hooking mechanism of the electrical energy storage unit (U) is a fork (25) fitted at its upper end with a fastening point (252) to the hoist (22) or winch.

9. The shelter (1) according to any one of Claims 6 to 8, **characterized in that** said gallows (21) comprises a vertical stanchion (211) to which a horizontal crossbar (212) is fixed, this stanchion (211) and this crossbar (212) being optionally connected by an oblique support bar (213), the free end (214) of the horizontal crossbar (212) bearing hooking means (215) of said hoist or winch (22) and the lower end (216) of said stanchion (211) being assembled with a point of said external surface of the shelter (1) by said assembly means (18).

10. The shelter (1) according to Claim 9, **characterized in that** the gallows (21) is mounted pivoting in a barrel (18) provided in the outer wall (15, 16) of the shelter (1) or fixed on the latter.

11. The shelter (1) according to any one of Claims 6 to 8, **characterized in that** said gallows (24) comprises a horizontal support (241) whereof the two ends are recurved and assembled with the upper wall (15) of the shelter (1) by said assembly means (18) and a longitudinal bar (242) arranged perpendicularly to the support (241), whereof the free end supports a hoist or a winch (22) and whereof the fixed end (243) is assembled with the upper wall (15) of the shelter (1) by said assembly means (18), the longitudinal bar (242) being fixed between its two ends on the support (241), perpendicularly to the latter.

12. The shelter (1) according to any one of Claims 6 to 8, **characterized in that** the gallows (24') comprises a horizontal support (241) whereof the two ends are recurved and assembled with the upper wall (15) of the shelter (1) by said assembly means (18) and an L-shaped longitudinal bar (245) whereof the vertical branch (246) is mounted pivoting in the upper wall (15) of the shelter (1) by said assembly means (18) and whereof the horizontal branch (247) can slide on said horizontal support (241) during rotation of the gallows (24').

13. The shelter (1) according to any one of Claims 9 to 12, **characterized in that** the horizontal crossbar (212) or the longitudinal bar (242, 247) comprises at its free end (214) an element mobile in translation, such as a dolly (216) or a telescopic portion, the hoist (22) or winch being fixed on this element mobile in translation.

14. The shelter (1) according to any one of the preceding claims, **characterized in that** the assembly means (18) are removable assembly means.

15. The shelter (1) according to Claims 6 and 14, **characterized in that** said removable assembly means comprise a barrel (18) and **in that** this barrel (18) is configured so that the base (216) of the gallows (21, 24, 24') can be inserted into it and extracted from it removably.

16. The shelter (1) according to any one of Claims 1 to 13, **characterized in that** the assembly means (18) are permanent assembly means.

17. The shelter (1) according to any one of the preceding claims, **characterized in that** said assembly means (18) are positioned at a point of the upper surface of the shelter (1), such as the upper wall (15), an upper spar (121), an upper crossbar (131, 141) or the apex of a stanchion (101, 102).

18. The shelter (1) according to any one of Claims 1 to 16, **characterized in that** said assembly means (18) are positioned at a point of the lateral surface of the shelter, such as the lateral wall (16) or a vertical stanchion (101, 102).

19. The shelter (1) according to Claim 17, **characterized in that** the assembly means (18) are a barrel formed in the thickness of the upper surface of the shelter.

20. The shelter (1) according to Claim 17 or 18, **characterized in that** the assembly means (18) are a barrel formed in a separate piece, attached to the wall of the shelter (1), such as a corner piece (6).

21. The shelter (1) according to Claim 15, **characterized in that** the barrel (18) is fixed at the centre of a shear load cross (7) whereof the four ends are assembled by means of removable or permanent assembly means (18) to the upper wall (15) of said shelter (1).
